# EUROPÄISCHE PATENTANMELDUNG

(11) **EP 3 171 510 A1**
(43) Veröffentlichungstag der Anmeldung: **24.05.2017**
(21) Anmeldenummer: 16198199.8
(22) Anmeldetag: 10.11.2016
(51) Int. Cl.: H02P 27/08, G10K 15/04

(54) **VERFAHREN ZUM BETREIBEN EINES ELEKTROMOTORS**

(30) Priorität: 21.11.2015 DE 102015015131
(71) Anmelder: AUDI AG, 85045 Ingolstadt (DE)
(72) Erfinder: Burger, Josef, 92358 Seubersdorf (DE)

(57) **Zusammenfassung**

Die Erfindung betrifft ein Verfahren zum Betreiben eines Elektromotors, bei dem für eine elektrische Größe des Elektromotors ein pulsweitenmoduliertes Grundsignal, das eine Pulsweitenmodulationsfrequenz aufweist, erzeugt wird, wobei für die elektrische Größe ein sinusförmiges Zusatzsignal mit einer Sinusfrequenz im akustisch hörbaren Frequenzbereich erzeugt wird, wobei das Grundsignal und das Zusatzsignal zu einem Akustiksignal (14) für die elektrische Größe addiert werden, wobei dem Elektromotor die elektrische Größe mit dem Akustiksignal (14) bereitgestellt wird.

## Beschreibung

Die Erfindung betrifft ein Verfahren und eine Anordnung zum Betreiben eines Elektromotors.

Zum Erzeugen eines akustischen Signals wird üblicherweise ein Lautsprecher oder ein Summer eingesetzt, der auch als sogenannter Sounder bezeichnet werden kann.

Aus der Druckschrift DE 10 2010 043 973 A1 ist ein Verfahren zur Erzeugung eines Geräusches eines durch einen Elektromotor angetriebenen Kraftfahrzeugs bekannt. Hierbei wird für einen Elektromotor ein Ansteuersignal erzeugt, das eine Modulation zur Erzeugung des Geräusches aufweist.

Ein Verfahren zum synthetischen Erzeugen eines akustischen Signals, das von einem Ansteuersignal zum Steuern eines Motors ausgeht, ist in der Druckschrift DE 10 2012 112 107 A1 beschrieben. Hierbei wird das akustische Signal durch einen elektromechanischen Wandler mittels eines elektrischen Wandlererregersignals erzeugt.

In der Druckschrift DE 10 2012 211 689 A1 ist ein Verfahren zum Erzeugen eines Geräusches mit einem Elektromotor eines Fahrzeugs bekannt. Hierzu ist vorgesehen, dass eine Bestromung des Elektromotors zur Erzeugung des Geräusches derart modifiziert wird, dass eine resultierende Änderung einer Umdrehung einer Welle des Elektromotors innerhalb einer definierten Bandbreite liegt.

Die Druckschrift DE 10 2011 017 226 A1 beschreibt eine Abgasanlage eines Fahrzeugs mit einer Abgasrückführungs-Einrichtung und ein Verfahren zum Betreiben einer solchen Abgasanlage, wobei mit einer Abgasklappe der Abgasanlage Schall erzeugt wird. Aus der Druckschrift DE 103 29 037 A1 sind ein Verfahren und eine Vorrichtung zur Schwingungsdämpfung für ein Fahrzeug bekannt. Eine Fahrerassistenzeinrichtung für ein Fahrzeug ist in der Druckschrift DE 10 2013 100 982 A1 beschrieben und dazu ausgebildet, in Abhängigkeit eines Zustands des Fahrzeugs Schwingungen oder Vibrationen zu erzeugen.

Vor diesem Hintergrund war es eine Aufgabe, für einen bspw. als Stellantrieb ausgebildeten Elektromotor ein akustisches Signal zu erzeugen.

Diese Aufgabe wird durch ein Verfahren und eine Anordnung mit den Merkmalen der unabhängigen Patentansprüche gelöst. Ausgestaltungen des Verfahrens und der Anordnung gehen aus den abhängigen Patentansprüchen sowie der Beschreibung hervor.

Das erfindungsgemäße Verfahren ist zum Betreiben eines Elektromotors vorgesehen. Hierbei wird für eine elektrische Größe des Elektromotors ein pulsweitenmoduliertes Grundsignal, das eine Pulsweitenmodulationsfrequenz aufweist, zur Ansteuerung des Elektromotors erzeugt. Außerdem wird für die elektrische Größe ein sinusförmiges Zusatzsignal mit einer Sinusfrequenz im akustisch hörbaren Frequenzbereich erzeugt. Das Grundsignal und das Zusatzsignal werden zu einem Akustiksignal für die elektrische Größe addiert, wobei dem Elektromotor die elektrische Größe mit dem Akustiksignal bereitgestellt wird. Weiterhin wird von dem Elektromotor das durch Addition des Grundsignals und des Zusatzsignals resultierende Akustiksignal erzeugt.

Üblicherweise ist die Sinusfrequenz geringer als die Pulsweitenmodulationsfrequenz. In der Regel weist die Sinusfrequenz im hörbaren Bereich einen Wert auf, der sich vom Infraschallbereich ab einigen Hertz bis zum Ultraschallbereich von ca. 20.000 Hz erstreckt. Dabei ist es möglich, einen genauen Wert der Frequenz nutzerspezifisch auszuwählen und einzustellen. Die Pulsweitenmodulationsfrequenz beträgt in der Regel zumindest einige tausend Hertz bspw. mindestens 10.000 Hz oder 20.000 Hz.

Das Verfahren wird für einen Elektromotor durchgeführt, der als eine Komponente und/oder als ein Teil einer Vorrichtung, üblicherweise einer technischen Anlage, ausgebildet ist.

Außerdem wird das Verfahren für den Fall durchgeführt, dass für mindestens eine Komponente der Vorrichtung, d. h. für den Elektromotor und/oder für mindestens eine weitere Komponente der Vorrichtung, eine definierte Betriebssituation vorliegt. Diesbezüglich ist in Ausgestaltung denkbar, den Wert der Sinusfrequenz abhängig von einer Art der Betriebssituation einzustellen. Falls das Verfahren bei Vorliegen unterschiedlicher Betriebssituationen durchgeführt wird, ist für jede dieser Betriebssituationen eine individuelle Sinusfrequenz einstellbar.

Üblicherweise ist vorgesehen, dass die mindestens eine Komponente der Vorrichtung und somit ggf. auch die komplette Vorrichtung mit dem Elektromotor bewegt wird.

Diesbezüglich ist es möglich, dass die Vorrichtung als Kraftfahrzeug ausgebildet ist. Hierbei ist das Kraftfahrzeug mit dem Elektromotor zu bewegen und somit anzutreiben. Es ist alternativ oder ergänzend auch möglich, dass mit dem Elektromotor eine Komponente des Kraftfahrzeugs zu beaufschlagen und somit zu bewegen ist. Eine derartige Komponente ist bspw. als Verschlusselement, bspw. als Tür, Klappe oder Fensterscheibe, einer Öffnung einer Karosserie des Kraftfahrzeugs ausgebildet.

Ferner kann optional vorgesehen sein, dass mit mindestens einem Sensor, der der Vorrichtung zugeordnet und/oder als mindestens eine Komponente der Vorrichtung ausgebildet ist, Betriebsparameter der mindestens einen Komponente der Vorrichtung überwacht werden. Das Verfahren wird dann durchgeführt, wenn für den mindestens einen Betriebsparameter ein Wert vorliegt, der die definierte Betriebssituation anzeigt. Allerdings kann auf einen derartigen Sensor verzichtet werden.

Eine im Rahmen des Verfahrens durchzuführende Modulation wird für das gesamte bzw. komplette Grundsignal durchgeführt.

In Ausgestaltung des Verfahrens wird ein Tastgrad bzw. ein Ansteuergrad der Pulsweitenmodulation variiert, wobei ein Verhältnis einer Dauer eines Pulses der Pulsweitenmodulation zu einer Dauer einer Periode der Pulsweitenmodulation verändert wird.

Alternativ oder ergänzend wird eine Pulsbreite und somit eine Breite des Pulses der Pulsweitenmodulation variiert.

Das Verfahren kann für einen als Stellantrieb ausgebildeten Elektromotor durchgeführt werden.

Die erfindungsgemäße Anordnung ist zum Betreiben eines Elektromotors, bspw. eines Stellantriebs, ausgebildet. Hierbei wird für eine elektrische Größe des Elektromotors ein pulsweitenmoduliertes Grundsignal, das eine Pulsweitenmodulationsfrequenz aufweist, zur Ansteuerung des Elektromotors erzeugt. Die Anordnung umfasst mindestens ein Steuergerät (ECU), das dazu ausgebildet ist, für die elektrische Größe ein sinusförmiges Zusatzsignal mit einer Sinusfrequenz im akustisch hörbaren Frequenzbereich zu erzeugen, das Grundsignal und das Zusatzsignal zu einem Akustiksignal für die elektrische Größe zu addieren und dem Elektromotor die elektrische Größe mit dem Akustiksignal bereitzustellen.

Außerdem ist das mindestens eine Steuergerät dazu ausgebildet, das pulsweitenmodulierte Grundsignal zu erzeugen. Dabei ist es möglich, dass das Steuergerät unabhängig von dem beschriebenen Verfahren auch andere Funktionen durchführt. Bei einem Einsatz in einem Kraftfahrzeug kann somit ein ohnehin vorhandenes Steuergerät verwendet werden, das ggf. auch weitere Funktionen des Elektromotors und/oder anderer Geräte des Kraftfahrzeugs steuern kann.

Das mindestens eine Steuergerät ist in Ausgestaltung in einem Gehäuse des Elektromotors angeordnet und kann auch zum Steuern anderer Funktionen des Elektromotors ausgebildet sein.

Das Steuergerät als Komponente der Anordnung kann weiterhin eine Brückenschaltung, bspw. eine sogenannte H-Brücke, aufweisen, die in Ausgestaltung ebenfalls zum Erzeugen des Akustiksignals verwendet werden kann. Dabei ist es in einer Ausführungsform möglich, dass das pulsweitenmodulierte Grundsignal sowie das sinusförmige Zusatzsignal bereits vor der Brückenschaltung miteinander bspw. digital addiert werden, wobei ein aus einer derartigen Addition resultierendes Akustiksignal für die vorgesehene elektrische Größe ausgehend von der Brückenschaltung dem Elektromotor bereitgestellt wird. Alternativ hierzu ist es jedoch auch möglich, dass das pulsweitenmodulierte Grundsignal die Brückenschaltung durchläuft und erst danach das Zusatzsignal bspw. analog addiert wird, wobei ein resultierendes Akustiksignal für die elektrische Größe dem Elektromotor bereitgestellt wird.

Die Anordnung kann optional mindestens einen Sensor aufweisen, der mindestens einer Komponente einer Vorrichtung zugeordnet und dazu ausgebildet ist, Betriebsparameter der mindestens einen Komponente der Vorrichtung zu überwachen. Dabei ist von der Anordnung eine Ausführungsform des vorgestellten Verfahrens durchzuführen, wenn ein Wert des mindestens einen Betriebsparameters ein Vorliegen einer definierten Betriebssituation für die mindestens eine Komponente anzeigt.

Bei der elektrischen Größe handelt es sich bspw. um eine an dem Elektromotor anliegende Spannung oder einen durch den Elektromotor fließenden Strom.

Mit dem vorgestellten Verfahren und/oder der vorgestellten Anordnung ist es möglich, mit dem Elektromotor und somit einem Elektroantrieb das hörbare Akustiksignal zu erzeugen. Hierzu sind lediglich der Elektromotor sowie das Steuergerät, die in der Vorrichtung ohnehin vorhanden sind, erforderlich. Auf ein zusätzliches Modul, bspw. einen Lautsprecher, eine Membran, eine Klappe oder einen Summer, kann somit verzichtet werden. Somit kann mit dem bspw. als Stellantrieb ausgebildeten Elektromotor das Akustiksignal selbsttätig erzeugt werden, ohne dass hierfür das zusätzliche Modul erforderlich ist, wodurch u. a. auch bei einer Verwendung in einem Kraftfahrzeug Gewicht und Bauraum eingespart werden können.

Somit ist es bspw. möglich, über das Akustiksignal ein Warnsignal zu erzeugen, wenn die mindestens eine Komponente der Vorrichtung sich in einer bestimmten Betriebssituation befindet. Dies betrifft bspw. eine automatische Heckklappe eines Kraftfahrzeugs als Komponente, die mit einem als Stellantrieb ausgebildeten Elektromotor hin- und herzubewegen und somit sowohl zu öffnen als auch zu schließen ist. Das Akustiksignal wird bspw. dann erzeugt, wenn für die Heckklappe als eine mögliche Betriebssituation ein Anlernlauf durchgeführt wird. Alternativ oder ergänzend wird das Akustiksignal von dem Elektromotor erzeugt, wenn auf die Heckklappe eine externe Kraft wirkt, aufgrund der die Heckklappe ebenfalls in eine definierte Betriebssituation versetzt wird. Weiterhin ist es möglich, dass der als Stellantrieb für die Heckklappe ausgebildete Elektromotor das als Warnsignal ausgebildete Akustiksignal aufgrund einer Fremdeinwirkung auf die Heckklappe selbst erzeugt.

Das Verfahren ist bspw. auch für ein Kraftfahrzeug als Vorrichtung durchführbar bzw. durchzuführen, das zu seinem Antrieb mindestens einen Elektromotor aufweist. Über das zu erzeugende Akustiksignal ist hierbei mit dem mindestens einen Elektromotor ein Motorgeräusch zu erzeugen.

Zum Erzeugen des Akustiksignals aus einer Addition des Grundsignals und des Zusatzsignals wird die Pulsweitenmodulationsfrequenz des Grundsignals, aufgrund der der Elektromotor angesteuert wird, mit der Sinusfrequenz im hörbaren Bereich überlagert. Hierdurch ist bzw. sind eine Tonlage und/oder ein Pegel des hörbaren Akustiksignals zu beeinflussen bzw. beeinflussbar.

Das im Rahmen des Verfahrens erzeugte Akustiksignal ist für den Elektromotor materialschonend. Außerdem ist das Akustiksignal weiterhin dadurch modulierbar bzw. zu modulieren, indem für das pulsweitenmodulierte Grundsignal ein Tastgrad bzw. ein Tastverhältnis variiert wird. Weiterhin ist alternativ oder ergänzend auch eine Modulation einer Amplitude oder einer Frequenz des Grundsignals möglich, bevor dieses mit dem Zusatzsignal zu dem Akustiksignal addiert wird.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.
Figur 1 umfasst eine schematische Darstellung einer ersten Ausführungsform der erfindungsgemäßen Anordnung und Diagramme, die u. a. einen Verlauf eines Akustiksignals, das bei Durchführung einer ersten Ausführungsform des erfindungsgemäßen Verfahrens bereitgestellt wird, zeigen.
Figur 2 zeigt in schematischer Darstellung eine zweite Ausführungsform der erfindungsgemäßen Anordnung und Diagramme zu einer zweiten Ausführungsform des erfindungsgemäßen Verfahrens.

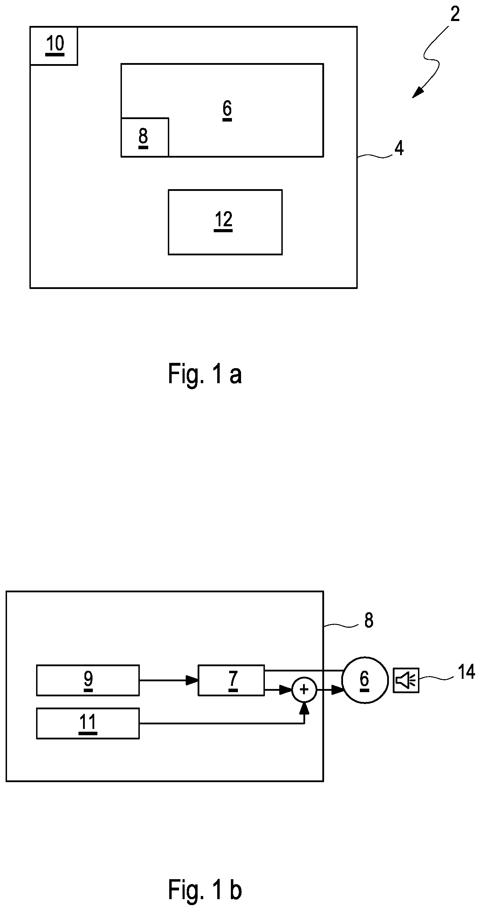

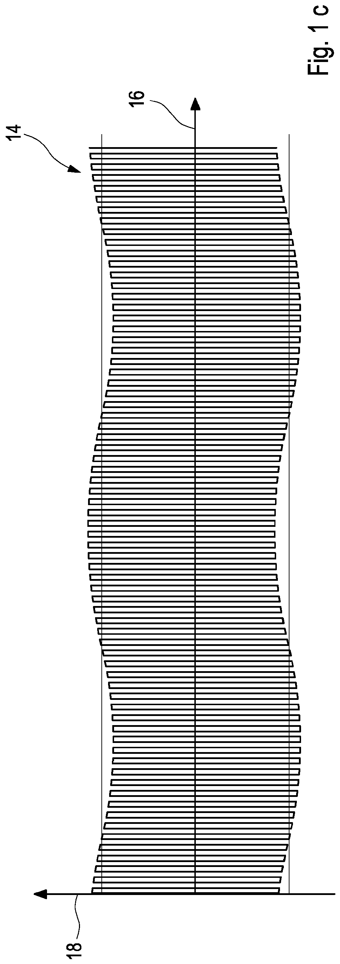

Die anhand von Figur 1 a schematisch dargestellte Ausführungsform der erfindungsgemäßen Anordnung 2 ist hier für ein Kraftfahrzeug als Beispiel für eine technische Vorrichtung 4 vorgesehen. Dabei umfasst die Anordnung 2 einen Elektromotor 6 als Elektroantrieb sowie ein Steuergerät 8, das hier als Komponente des Elektromotors 6 ausgebildet ist. Ferner umfasst die Vorrichtung 4 einen optionalen zur Kontrolle verwendbaren Sensor 10 und eine hier bspw. als Klappe ausgebildete Komponente 12 des Kraftfahrzeugs, die über den Elektromotor 6 zu bewegen ist.

Weiterhin wird auf Figur 1b verwiesen, die neben dem Elektromotor 6 auch eine Brückenschaltung 7 als Komponente des Steuergeräts 8 umfasst. Weiterhin zeigt Figur 1b ein pulsweitenmoduliertes Grundsignal 9, das einen PWM- bzw. pulsweitenmodulierten Rechtecktakt umfasst, sowie ein als Sinussignal ausgebildetes Zusatzsignal 11.

Bei einem Betrieb des Elektromotors 6, der hier als Stellantrieb ausgebildet ist, wird hier mit dem Steuergerät 8 das pulsweitenmodulierte Grundsignal 9 für eine elektrische Größe erzeugt, mit dem der Elektromotor 6 angesteuert wird, wobei elektrische Energie, die über das Grundsignal 9 bereitgestellt wird, mit dem Elektromotor 6 in mechanische Energie umgewandelt wird, durch die die Komponente 12 wiederum in Bewegung zu setzen ist bzw. gesetzt wird. Das Grundsignal 9 weist hier eine konstante Amplitude auf.

Bei Durchführung der Ausführungsform des erfindungsgemäßen Verfahrens kann mit dem optionalen Sensor 10 eine definierte Betriebssituation der Komponente 12 erfasst werden.

Sofern für die Komponente 12 die besondere bzw. definierte Betriebssituation erkannt und/oder erfasst worden ist, ist im Rahmen der Ausführungsform des Verfahrens vorgesehen, dass mit dem Elektromotor 6 ein Akustiksignal 14 erzeugt wird, das ebenfalls in Figur 1b schematisch gezeigt und dessen Verlauf in dem Diagramm aus Figur 1c dargestellt ist.

Dieses Diagramm aus Figur 1c umfasst eine Abszisse 16, entlang der die Zeit aufgetragen ist, und eine Ordinate 18, entlang der Werte der elektrischen Größe, bspw. einer Spannung, aufgetragen sind, wobei diese elektrische Größe dem Elektromotor 6 mit dem und/oder über das Akustiksignal 14 bereitgestellt wird. Zum Erzeugen des Akustiksignals 14 wird neben dem pulsweitenmodulierten Grundsignal 9 für den Elektromotor 6, das eine Pulsweitenmodulationsfrequenz aufweist, ergänzend das sinusförmige Zusatzsignal 11 mit einer Sinusfrequenz im akustisch hörbaren Frequenzbereich erzeugt. Weiterhin werden das Grundsignal 9 und das Zusatzsignal 11 zu dem Akustiksignal 14 für die elektrische Größe addiert, das wiederum dem Elektromotor 6 bereitgestellt wird.

Diesbezüglich wird auch auf die Darstellung aus Figur 1b verwiesen, die zeigt, dass das pulsweitenmodulierte Grundsignal 9 der Brückenschaltung 7 des Steuergeräts 8 zugeführt wird. Das Zusatzsignal 11 wird jedoch erst nach der Brückenschaltung 7 zu dem Grundsignal 9 addiert. Das aus einer Addition des Grundsignals 9 und des Zusatzsignals 11 resultierende Akustiksignal 14 wird weiterhin an den Elektromotor 6 weitergeleitet, der aufgrund des bereitgestellten Grundsignals 9 eine für eine jeweilige Betriebssituation vorgesehene Bewegung durchführt, sowie aufgrund des bereitgestellten Zusatzsignals 11 das Akustiksignal 14 betriebsbegleitend erzeugt. Dabei ist vorgesehen, dass das Grundsignal 9 und das Zusatzsignal 11 für den Elektromotor 6 analog addiert werden.

Wie das Diagramm aus Figur 1c zeigt, umfasst das Akustiksignal 14 das pulsweitenmodulierte und rechteckförmige Grundsignal 9, das aufgrund der Addition mit dem Zusatzsignal 11 mit der Sinusfrequenz komplett schwingt, wobei die Amplitude des Grundsignals 9 der Pulsweitenmodulation durch das hinzuaddierte Zusatzsignal 11 sinusförmig moduliert wird.

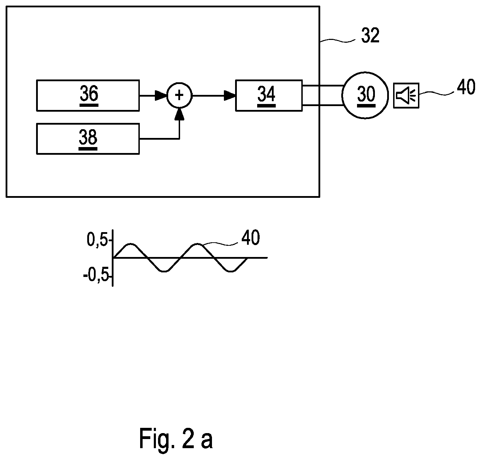

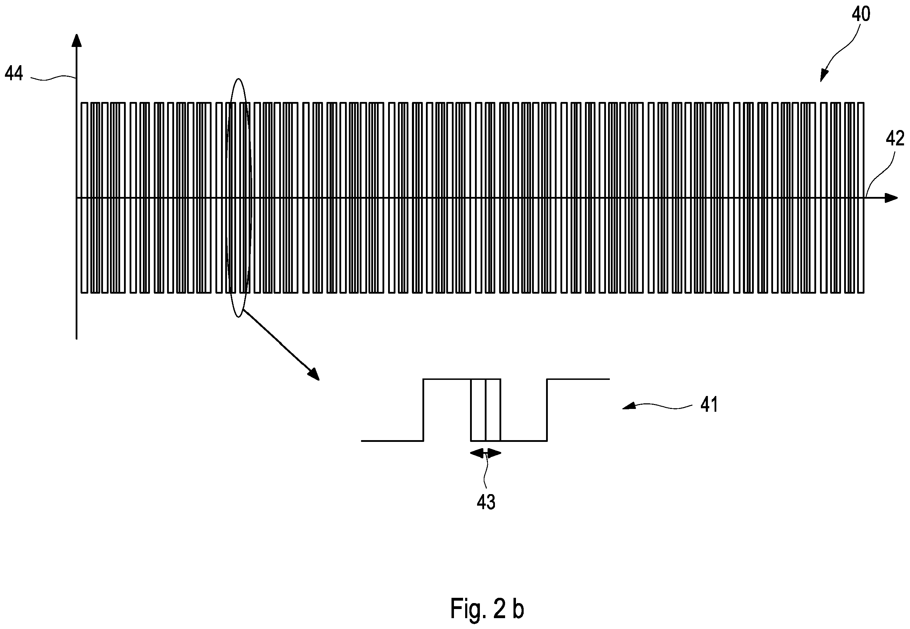

Figur 2 zeigt in schematischer Darstellung einen als Stellantrieb ausgebildeten Elektromotor, dem hier ein Steuergerät 32 zugeordnet ist, mit dem auch unabhängig von der Ausführungsform des vorgestellten erfindungsgemäßen Verfahrens mindestens eine Funktion des Elektromotors 30 kontrolliert werden kann. Dabei ist als eine Komponente des Steuergeräts 32 eine H-Brücke und somit eine Brückenschaltung 34 gezeigt. Bei einem üblichen Betrieb des Elektromotors 30 wird dieser über ein pulsweitenmoduliertes Grundsignal 36 für eine elektrische Größe angesteuert und somit in Bewegung versetzt. Dabei weist dieses Grundsignal 36 eine für einen Betrieb des Elektromotors 30 übliche Pulsweitenmodulationsfrequenz auf, wobei das Grundsignal 36 der Pulsweitenmodulation und/oder die Pulsweitenmodulationsfrequenz u. a. von einem Tastgrad abhängig ist.

Im Rahmen der Ausführungsform des Verfahrens wird ein sinusförmiges Zusatzsignal 38 mit einer Sinusfrequenz im akustisch hörbaren Frequenzbereich erzeugt. Das Grundsignal 36 für die bspw. als Strom oder Spannung ausgebildete elektrische Größe und das Zusatzsignal 38 werden hier vor der Brückenschaltung 34 miteinander addiert und über die Brückenschaltung 34 an den Elektromotor 30 weitergeleitet, der aufgrund des bereitgestellten Grundsignals 36 eine für eine jeweilige Betriebssituation vorgesehene Bewegung durchführt sowie aufgrund des bereitgestellten Zusatzsignals 38 ein Akustiksignal 40 für die elektrische Größe erzeugt, das auch in einem Diagramm, das Figur 2a zugeordnet ist, dargestellt ist und eine Frequenz von 10 kHz aufweist.

Das Diagramm aus Figur 2b umfasst eine Abszisse 42, entlang der die Zeit in Millisekunden aufgetragen ist, sowie eine Ordinate 44, entlang der eine Amplitude der elektrischen Größe aufgetragen ist. Innerhalb des Diagramms aus Figur 2b ist ebenfalls das von dem Elektromotor 30 im Rahmen des Verfahrens erzeugte Akustiksignal 40 angezeigt. Figur 2b zeigt auch ein Detail 41 des Akustiksignals 40. Dabei ist für dieses Detail 41 anhand eines Doppelpfeils 43 angedeutet, wie eine Breite einer Flankenlage eines Rechteckpulses des Akustiksignals 40 variiert ist bzw. wird. Dabei ist es möglich, die Breite der Flankenlage bereits bei einer Erzeugung eines Tastgrads des Grundsignals zu variieren. Im Rahmen des Verfahrens ist vorgesehen, dem Elektromotor 30 die in dem Diagramm gezeigte elektrische Größe mit dem Akustiksignal 40 bereitzustellen, wobei der Elektromotor 30 dieses Akustiksignal 40 betriebsbegleitend erzeugt.

## Patentansprüche

1. Verfahren zum Betreiben eines Elektromotors (6, 30), bei dem für eine elektrische Größe des Elektromotors (6, 30) ein pulsweitenmoduliertes Grundsignal (9, 36), das eine Pulsweitenmodulationsfrequenz aufweist, erzeugt wird, wobei für die elektrische Größe ein sinusförmiges Zusatzsignal (11, 38) mit einer Sinusfrequenz im akustisch hörbaren Frequenzbereich erzeugt wird, wobei das Grundsignal (9, 36) und das Zusatzsignal (11, 38) zu einem Akustiksignal (14, 40) für die elektrische Größe addiert werden, wobei dem Elektromotor (6, 30) die elektrische Größe mit dem Akustiksignal (14, 40) bereitgestellt wird.

2. Verfahren nach Anspruch 1, bei dem die Sinusfrequenz geringer als die Pulsweitenmodulationsfrequenz gewählt wird.

3. Verfahren nach Anspruch 1 oder 2, das für einen Elektromotor (6, 30) durchgeführt wird, der als Teil einer Vorrichtung (4) ausgebildet ist.

4. Verfahren nach Anspruch 3, das durchgeführt wird, wenn für mindestens eine Komponente (12) der Vorrichtung (4) eine definierte Betriebssituation vorliegt.

5. Verfahren nach Anspruch 4, bei dem die mindestens eine Komponente (12) der Vorrichtung (4) mit dem Elektromotor (6, 30) bewegt wird.

6. Verfahren nach einem der Ansprüche 3 bis 5, das für einen Elektromotor (6, 30) einer als Kraftfahrzeug ausgebildeten Vorrichtung (4) durchgeführt wird.

7. Verfahren nach einem der voranstehenden Ansprüche, bei dem ein Tastgrad der Pulsweitenmodulation variiert wird.

8. Verfahren nach einem der voranstehenden Ansprüche, bei dem eine Pulsbreite der Pulsweitenmodulation variiert wird.

9. Verfahren nach einem der voranstehenden Ansprüche, das für einen als Stellantrieb ausgebildeten Elektromotor (6, 30) durchgeführt wird.

10. Anordnung zum Betreiben eines Elektromotors (6, 30), wobei für eine elektrische Größe des Elektromotors (6, 30) ein pulsweitenmoduliertes Grundsignal (9, 36), das eine Pulsweitenmodulationsfrequenz aufweist, zu erzeugen ist, wobei die Anordnung (2) mindestens ein Steuergerät (8, 32) aufweist, das dazu ausgebildet ist, für die elektrische Größe ein sinusförmiges Zusatzsignal (11, 38) mit einer Sinusfrequenz im akustisch hörbaren Frequenzbereich zu erzeugen, das Grundsignal (9, 36) und das Zusatzsignal (11, 38) zu einem Akustiksignal (14, 40) für die elektrische Größe zu addieren und dem Elektromotor (6, 30) die elektrische Größe mit dem Akustiksignal (14, 40) bereitzustellen.

11. Anordnung nach Anspruch 10, bei der das mindestens eine Steuergerät (8, 32) dazu ausgebildet ist, das pulsweitenmodulierte Grundsignal (9, 36) zu erzeugen.

12. Anordnung nach Anspruch 10 oder 11, bei der das mindestens eine Steuergerät (8, 32) in einem Gehäuse des Elektromotors (6, 30) angeordnet ist.

13. Anordnung nach einem der Ansprüche 10 bis 12, bei der das Steuergerät (8, 32) eine Brückenschaltung (7, 34) umfasst, wobei das Grundsignal (9, 36) und das Zusatzsignal (11, 38) entweder vor der Brückenschaltung (7, 34) oder nach der Brückenschaltung (7, 34) addiert werden.

14. Anordnung nach einem der Ansprüche 10 bis 13, die optional mindestens einen Sensor (10) aufweist, der mindestens einer Komponente (12) einer Vorrichtung (4) zugeordnet und dazu ausgebildet ist, Betriebsparameter der mindestens einen Komponente (12) der Vorrichtung (4) zu überwachen, wobei von der Anordnung (2) ein Verfahren nach einem der Ansprüche 1 bis 9 durchzuführen ist, wenn ein Wert des mindestens einen Betriebsparameters ein Vorliegen einer definierten Betriebssituation für die mindestens eine Komponente (12) anzeigt.
